# EUROPEAN PATENT APPLICATION

(11) **EP 4 679 583 A1**
(43) Date of publication of application: **14.01.2026**
(21) Application number: 25188006.8
(22) Date of filing: 08.07.2025
(51) Int. Cl.: H01M 50/15, H01M 50/184, H01M 50/186, H01M 50/553, H01M 50/566, H01M 10/42

(54) **END CAP ASSEMBLY, ENERGY STORAGE DEVICE AND ELECTRICITY-CONSUMPTION EQUIPMENT**

(30) Priority: 10.07.2024 CN 202421631223 U
(71) Applicant: Xiamen Hithium Energy Storage Technology Co., Ltd., Xiamen, Fujian 361100 (CN)
(72) Inventor: GAO, Yinghao, Xiamen, 361100 (CN); XIAO, Hepan, Xiamen, 361100 (CN); FU, Yunfeng, Xiamen, 361100 (CN); TAN, Jiben, Xiamen, 361100 (CN)
(74) Representative: RGTH

(57) **Abstract**

The present application discloses an end cover assembly, an energy storage device and electricity-consumption equipment. The end cover assembly includes an end plate, a pole and a connecting member. The end plate has a first surface and a second surface disposed opposite to each other along a thickness direction thereof. The end plate further has a first pole hole penetrating the end plate. The pole has a first pole section and a second pole section. An outer circumferential surface of the first pole section is connected with the outer circumferential surface of the second pole section through an annular stepped surface. The first pole section is inserted into the first pole hole. The connecting member is located at a side where the annular stepped surface of the pole is located, and has a second pole hole coaxially arranged with the first pole hole.

## Description

### TECHNICAL FIELD

The present application relates to the field of energy storage technology, and more specifically, to an end cap assembly, an energy storage device including the end cap assembly, and an electricity-consumption equipment including the energy storage device.

### BACKGROUND

In the related art, the end cap assembly of the battery needs to undergo airtightness detection during the manufacturing process to ensure the safety and service life of the battery during use.

### SUMMARY

The embodiments of the present application provide an end cap assembly, an energy storage device and an electricity-consumption equipment.

The end cap assembly of the embodiments of the present application is used for an energy storage device, including: an end plate, a pole, and a connecting member.

The end plate has a first surface and a second surface disposed opposite to each other along a thickness direction of the end plate. The end plate further has a first pole hole, and the first pole hole penetrates the first surface and the second surface.

The pole has a first pole section and a second pole section along an axial direction of the pole. A cross-sectional area of the first pole section is larger than a cross-sectional area of the second pole section. An outer circumference surface of the first pole section and an outer circumference surface of the second pole section are connected through an annular stepped surface. The first pole section is inserted into the first pole hole.

The connecting member is located at a side where the annular stepped surface of the pole is located, and has a second pole hole coaxially disposed with the first pole hole. The second pole section is inserted into the second pole hole and is connected to the connecting member. The connecting member has at least one first groove at a side facing the annular stepped surface. The first groove is communicated with the second pole hole.

An orthographic projection of the first groove on a plane where the first surface is located is a first projection, and an orthographic projection of the annular stepped surface on the plane where the first surface is located is a second projection. The first projection and the second projection have an overlapping region, and part of the first projection extends beyond an outer contour line of the second projection.

The energy storage device of the embodiments of the present application includes: a housing, an electrode assembly, and the end cap assembly as described in any of the above.

The housing includes an accommodating cavity having an opening.

The electrode assembly is accommodated in the housing.

The end cap assembly closes the opening of the housing.

The electricity-consumption equipment of the embodiments of the present application includes the above-mentioned energy storage device, and the energy storage device supplies power to the electricity-consumption equipment.

### BRIEF DESCRIPTION OF THE DRAWINGS

FIG. 1 shows a schematic diagram of a structure of a household energy storage system.
FIG. 2 shows an exploded schematic diagram of a single cell of the embodiment of the present application.
FIG. 3 shows an exploded schematic diagram of an end cap assembly of the embodiment of the present application.
FIG. 4 shows a top view of the end cap assembly of the embodiment of the present application.
FIG. 5 shows a partial cross-sectional view along the A-A section line in FIG. 4.
FIG. 6 shows a schematic diagram of a connecting member of the embodiment of the present application.
FIG. 7 shows a schematic diagram of a positional relationship between a first projection and a second projection.
FIG. 8 shows a schematic diagram of an upper insulating member of the embodiment of the present application.
FIG. 9 shows a schematic diagram of a lower insulating member of the embodiment of the present application.
FIG. 10 shows a schematic diagram of a positional relationship between a third projection and a fourth projection.
FIG. 11 shows a schematic diagram of a sealing member of the embodiment of the present application.
FIG. 12 shows a schematic diagram of a positional relationship between the first projection and a fifth projection.
FIG. 13 shows another schematic diagram of the positional relationship between the first projection and the fifth projection.
FIG. 14 shows a schematic diagram of an electricity-consumption equipment in an embodiment of the present application.

The reference signs are explained as follows:
1. Energy storage device; 2. Electric energy conversion device; 3. User load; 4. Electricity-consumption equipment;
10. Housing; 11. Accommodating cavity; 12. Opening; 20. Electrode assembly; 30. End cap assembly;
100. End plate; 101. First surface; 102. Second surface; 103. First pole hole; 104. Sinking groove; 105. Vent hole; 106. Liquid injection hole;
200. Pole; 210. First pole section; 220. Second pole section; 230. Third pole section; 240. Annular stepped surface;
300. Upper insulating member; 310. First annular portion; 320. Second annular portion; 321. Second groove; 330. Third annular portion;
400. Lower insulating member; 401. Third pole hole; 410. Annular flange; 411. Third groove; 420. Insulating sheet; 421. Through hole; 430. Fourth annular portion;
500. Connecting member; 501. Second pole hole; 510. First groove;
600. Sealing member; 610. Sealing ring; 620. Protrusion;
700. Explosion-proof valve;
800. Protective sheet.

### DETAILED DESCRIPTION

The example embodiments will now be described more fully with reference to the accompanying drawings. However, the example embodiments can be implemented in a variety of forms and may not be construed as limited to the embodiments described herein; rather, these embodiments are provided so that the present application will be comprehensive and complete and the concept of the example embodiments will be fully conveyed to those skilled in the art. The same reference signs in the figures represent the same or similar structures, and their detailed descriptions will be omitted.

It may be understood that the terms "include" and "have" and any variations thereof in the embodiments of the present application are intended to cover non-exclusive inclusions. For example, a process, method, system, product or device that includes a series of steps or units is not limited to the listed steps or units, but may optionally include steps or units that are not listed, or may optionally include other steps or components inherent to these processes, methods, products or devices.

Since the energy required by people has strong temporal and spatial characteristics, in order to rationally utilize energy and improve energy utilization, it is necessary to store one form of energy in the same form or convert it into another form of energy through a medium or device, and then release it in a specific form of energy based on future application needs.

At present, the application scenarios of energy storage (i.e., power storage) are quite extensive, including power generation side energy storage, grid side energy storage, renewable energy grid-connected energy storage, and user side energy storage, etc. The corresponding types of energy storage devices include:

(1) large container-type energy storage devices used in grid side energy storage scenarios, which can be used as high-quality active and reactive regulation power sources in the grid to achieve load matching of electric energy in time and space, enhance the renewable energy absorption capacity, and are of great significance in grid system backup, relieving peak load power supply pressure, and peak and frequency regulation;

(2) small and medium-sized energy storage cabinets used in industrial and commercial energy storage scenarios (banks, shopping malls, etc.) on the user side and small household energy storage boxes used in household energy storage scenarios on the user side. The main operating mode is "peak shaving and valley filling". Since there is a large price difference in electricity charges at peak and valley locations according to electricity demand, after users have the energy storage device, in order to reduce costs, they usually charge the energy storage cabinets/boxes during the low electricity price period; and during the peak electricity price period, the electricity in the energy storage device is discharged for use to achieve the purpose of saving electricity bills. In addition, in remote areas and areas prone to natural disasters such as earthquakes and hurricanes, the presence of household energy storage devices is equivalent to users providing backup power for themselves and the power grid, eliminating the inconvenience caused by frequent power outages due to disasters or other reasons.

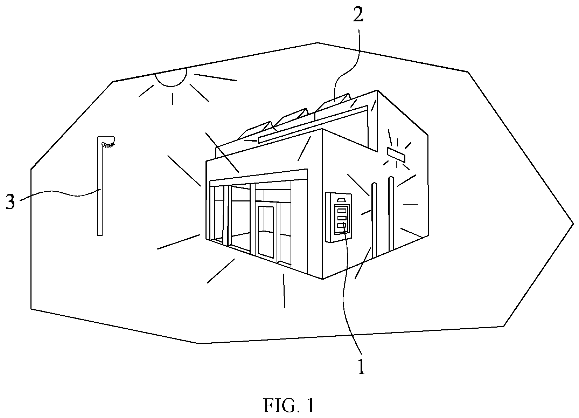

Taking the household energy storage scenario in user side energy storage as an example, FIG. 1 shows a household energy storage system, which includes an energy storage device 1 and an electric energy conversion device 2 (such as a photovoltaic panel), and a user load 3 (such as a street lamp, a household appliance, etc.). The energy storage device 1 is a small energy storage box that can be mounted on an outdoor wall by wall hanging. For example, the electric energy conversion device 2 can convert solar energy into electric energy during the low electricity price period, and store it through the energy storage device 1, and then supply it to the user load 3 for use during the peak electricity price, or supply it to the user load 3 for use when the power grid is off/blacked out.

In combination with the above-mentioned situation of energy storage by physical or electrochemical means, taking electrochemical energy storage as an example, the energy storage device 1 includes at least one group of chemical batteries, the chemical elements in the chemical batteries are used as the energy storage medium, and the charging and discharging process is realized through the chemical reaction or change of the energy storage medium. In simple terms, the electric energy generated by light energy and wind energy is stored in at least one group of chemical batteries through the chemical reaction or change of the energy storage medium, and when the use of external electric energy reaches a peak, the electric energy stored in at least one group of chemical batteries is released for use through the chemical reaction or change of the energy storage medium, or transferred to a place where the electric energy is scarce for use.

The embodiment of the present application provides an energy storage device 1, which can be but not limited to a single cell (secondary battery), a battery module, a battery pack, a battery system, etc. composed of single cells. As for the single cell, it may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, etc. The single cell may be cylindrical, flat, rectangular, etc., which are not limited by the embodiments of the present application. Next, the energy storage device 1 is explained in detail by taking the energy storage device 1 as a rectangular single cell as an example.

During the press-fit assembly, the pole assembly of the end cap assembly in the related art may temporarily meet the airtightness requirement (i.e., "false seal") due to the fitting connection between the abutment surfaces of a relatively hard part and a hard part, and the end cap assembly may pass the airtightness detection and become a qualified product for use. However, during the subsequent long-term use, due to the fluctuation of ambient temperature, the hard parts: such as the metal pole and the plastic insulating part, due to different materials, have different expansion and contraction rates, and their abutment surfaces may have a shrinkage gap, resulting in air leakage, which poses a serious safety hazard.

The embodiments of the present application provide an end cap assembly, an energy storage device and an electricity-consumption equipment that can improve the accuracy of airtightness detection.

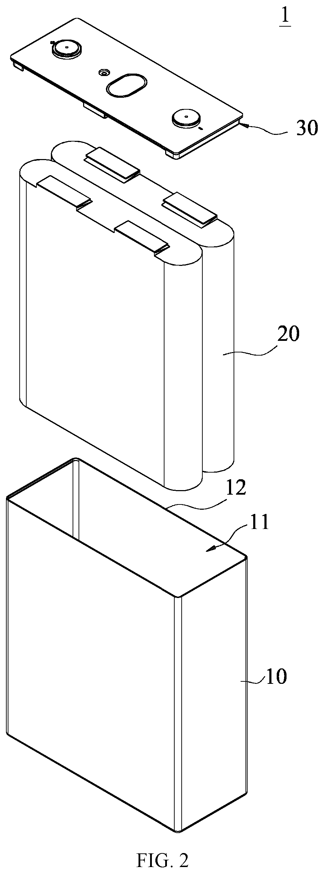

As shown in FIG. 2, the energy storage device 1 of the embodiment of the present application includes a housing 10, an electrode assembly 20 and an end cap assembly 30. The housing 10 includes an accommodating cavity 11 having an opening 12. The electrode assembly 20 is accommodated in the accommodating cavity 11. The end cap assembly 30 is connected to the housing 10 and closes the opening 12 of the accommodating cavity 11.

The housing 10 may be a cylindrical structure with the opening 12 at one end, and the energy storage device 1 includes one end cap assembly 30, which seals the opening 12. The housing 10 may also be a cylindrical structure with openings 12 at both ends, and the energy storage device 1 may include one end cap assembly 30 and one cover plate, or the energy storage device 1 includes two end cap assemblies 30. In this way, one end cap assembly 30 and one cover plate, or two end cap assemblies 30 can respectively seal the two openings 12 of the housing 10.

Optionally, the housing 10 may be a steel housing, an aluminum housing, a plastic housing (such as polypropylene), a composite metal housing (such as a copper-aluminum composite housing) or an aluminum-plastic film, etc.

The electrode assembly 20 includes a positive electrode sheet, a negative electrode sheet and a separator. The single cell works mainly by the movement of metal ions between the positive electrode sheet and the negative electrode sheet. The positive electrode sheet includes a positive electrode collector and a positive electrode active material layer. The positive electrode active material layer is coated on the surface of the positive electrode collector. The positive electrode collector not coated with the positive electrode active material layer protrudes from the positive electrode collector coated with the positive electrode active material layer, and the positive electrode collector not coated with the positive electrode active material layer serves as a positive electrode tab. Taking the lithium-ion battery as an example, the material of the positive electrode collector may be aluminum, and the positive electrode active material may be lithium cobalt oxide, lithium iron phosphate, ternary lithium or lithium manganate, etc. The negative electrode sheet includes a negative electrode current collector and a negative electrode active material layer. The negative electrode active material layer is coated on the surface of the negative electrode current collector. The negative electrode current collector not coated with the negative electrode active material layer protrudes from the negative electrode current collector coated with the negative electrode active material layer. The negative electrode current collector not coated with the negative electrode active material layer serves as a negative electrode tab. The material of the negative electrode current collector may be copper, and the negative electrode active material may be carbon or silicon, etc. The material of the separator may be PP or PE, etc. In addition, the electrode assembly 20 may be a winding structure or a stacked structure, and the embodiments of the present application are not limited thereto.

The positive electrode tab and the negative electrode tab may be located at the same end of the electrode assembly 20 (e.g., a square single cell), or at different ends of the electrode assembly 20 (e.g., a cylindrical single cell). When the positive electrode tab and the negative electrode tab are located at the same end of the electrode assembly 20, the end cap assembly 30 may be provided with a positive electrode pole and a negative electrode pole, and the positive electrode pole is connected to the positive electrode tab, and the negative electrode pole is connected to the negative electrode tab, to realize the output of the electric energy of the electrode assembly 20 through the positive electrode pole and the negative electrode pole. When the positive electrode tab and the negative electrode tab are respectively located at the two ends of the electrode assembly 20, one of the positive electrode tab and the negative electrode tab is connected to the pole provided in the end cap assembly 30, and the other of the positive electrode tab and the negative electrode tab is connected to the bottom of the housing 10 or the pole provided in the other end cap assembly 30. The pole connected to the positive electrode tab serves as the positive electrode pole, and the pole connected to the negative electrode tab serves as the negative electrode pole.

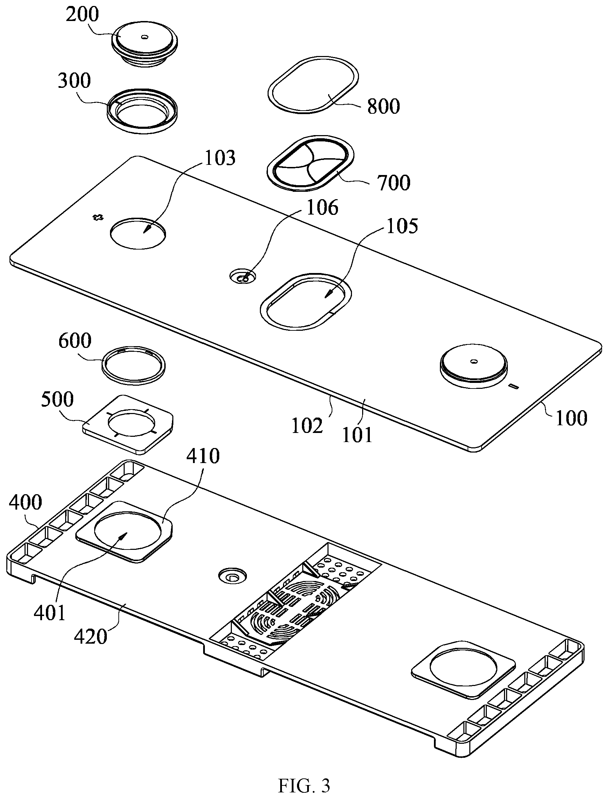

As shown in FIG. 3, the end cap assembly 30 includes an end plate 100, an explosion-proof valve 700, and a protective sheet 800. The end plate 100 is connected to the housing 10 and seals the opening 12 of the accommodating cavity 11. The connection method between the end plate 100 and the housing 10 can be welding, but it is not limited thereto. The shape of the end plate 100 is compatible with the shape of the opening 12. In the embodiment of the present application, the shape of the opening 12 is rectangular, thus the shape of the end plate 100 is also rectangular.

The end plate 100 has a vent hole 105, and the vent hole 105 penetrates the end plate 100 along the thickness direction of the end plate 100. The explosion-proof valve 700 is connected to a surface of the end plate 100 at a side facing the electrode assembly 20, and closes the vent hole 105. The explosion-proof valve 700 is used to explode and discharge the gas generated in the accommodating cavity 11 of the housing 10 when the air pressure of the energy storage device 1 reaches a certain pressure threshold, to avoid the battery from bulging and exploding, thereby improving the safety of the energy storage device 1.

The protective sheet 800 is attached to the side of the end plate 100 facing away from the electrode assembly 20, and covers the vent hole 105 and covers the explosion-proof valve 700, which plays a role in protecting the explosion-proof valve 700.

The end plate 100 is also provided with a liquid injection hole 106, which penetrates the end plate 100 along the thickness direction of the end plate 100. After the end cap assembly 30 seals the opening 12 of the accommodating cavity 11, the electrolyte can be injected into the accommodating cavity 11 of the housing 10 through the liquid injection hole 106. After the injection of the electrolyte is completed, the liquid injection hole 106 can be sealed with a sealing member (not shown in the figure) to avoid leakage of the electrolyte.

As shown in FIGs. 3 to 5, the end cap assembly 30 also includes a pole 200, an upper insulating member 300, a lower insulating member 400, a connecting member 500 and a sealing member 600. The end plate 100 has a first surface 101 and a second surface 102 that are arranged opposite to each other along its thickness direction. The end plate 100 also has a first pole hole 103, which penetrates the first surface 101 and the second surface 102. The pole 200 is limited in the first pole hole 103. The upper insulating member 300, the lower insulating member 400, the connecting member 500 and the sealing member 600 are all mounted on the end plate 100. In one embodiment, the end plate 100 is a plain aluminum sheet, but is not limited thereto. The upper insulating member 300 and the lower insulating member 400 are made of insulating material, such as plastic.

The lower insulating member 400 and the end plate 100 are superimposed on the second surface 102 of the end plate 100 to insulate the pole 200 from the end plate 100. The upper insulating member 300 surrounds the outer circumference of the pole to insulate the pole 200 from the end plate 100. The connecting member 500 is connected to one end of the pole 200 extending from the second surface 102, for example, by welding. The sealing member 600 is sealed between the end plate 100 and the connecting member 500.

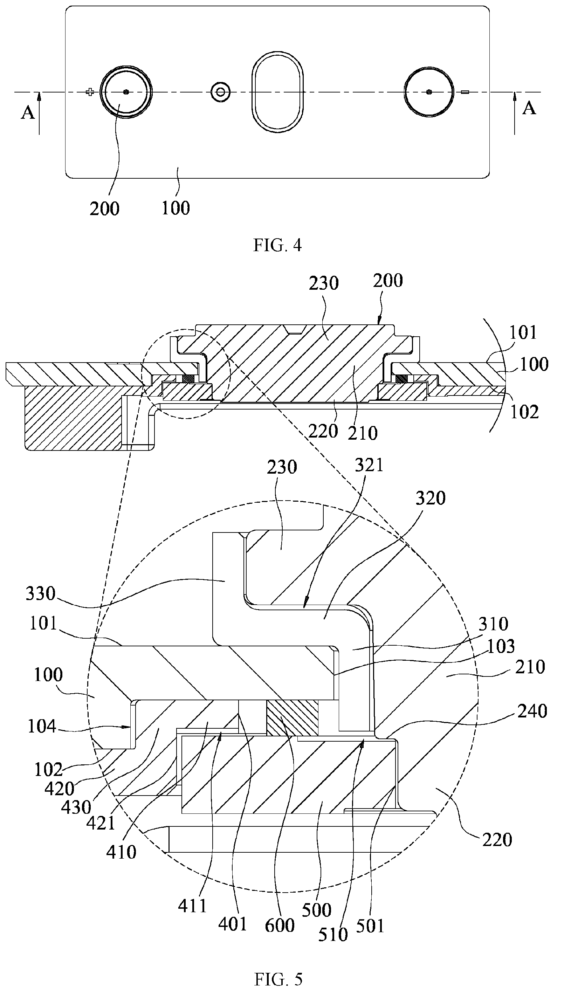

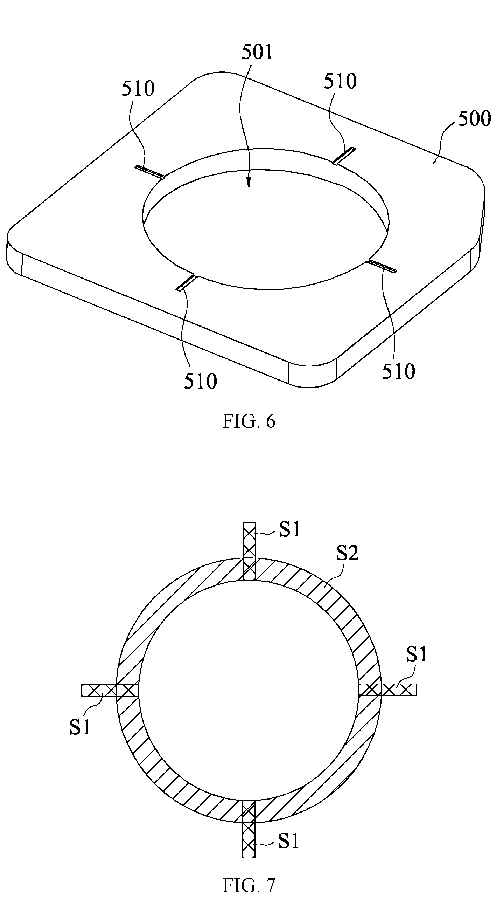

As shown in FIG. 5 and FIG. 6, the pole 200 has a first pole section 210 and a second pole section 220 along its axial direction. The first pole section 210 and the second pole section 220 are coaxially arranged, and the cross-sectional area of the first pole section 210 is larger than the cross-sectional area of the second pole section 220. The outer circumferential surface of the first pole section 210 is connected to the outer circumferential surface of the second pole section 220 through an annular stepped surface 240, and the first pole section 210 is inserted into the first pole hole 103. The connecting member 500 is located at the side where the annular stepped surface 240 of the pole is located, and has a second pole hole 501 coaxially arranged with the first pole hole 103. The second pole section 220 is inserted into the second pole hole 501 and connected to the connecting member 500. The connecting member 500 has at least one first groove 510 at the side facing the annular stepped surface 240, and the first groove 510 is communicated with the second pole hole 501.

As shown in FIG. 7, the orthographic projection of the first groove 510 on the plane where the first surface 101 is located is a first projection S1, and the orthographic projection of the annular stepped surface 240 on the plane where the first surface 101 is located is a second projection S2. There is an overlapping region between the first projection S1 and the second projection S2, and part of the first projection S1 extends beyond the outer contour line of the second projection S2.

It may be noted that the connecting member 500 and the second pole section 220 of the pole 200 are generally connected by welding, and the quality of the welding position between the connecting member 500 and the second pole section 220 determines the sealing performance between the connecting member 500 and the second pole section 220. If there is a welding defect at the welding position, such as a welding pinhole, a welding hole, etc., the end cap assembly 30 cannot pass the airtightness detection. However, after the connecting member 500 is welded to the second pole section 220, the connecting member 500 may press against the annular stepped surface 240, and at this time, the annular stepped surface 240 forms a seal with the surface at a side of the connecting member 500. Even if there is the welding defect at the welding position, the end cap assembly 30 will still pass the airtightness detection.

In the end cap assembly 30 of the embodiments of the present application, the side of the connecting member 500 facing the annular stepped surface 240 has at least one first groove 510. If there is a welding defect at the welding position of the connecting member 500 and the second pole section 220, even if the connecting member 500 fits the annular stepped surface 240, the welding position can also be communicated with the outside through the first groove 510. At this time, the end cap assembly 30 with the welding defect at the welding position cannot pass the airtightness detection, thereby improving the accuracy of the airtightness detection and eliminating safety hazard.

In one embodiment, the surface at the side of the connecting member 500 facing the annular stepped surface 240 is press-fitted to the annular stepped surface 240 with an interference fit.

In the embodiments of the present application, since the connecting member 500 has a first groove 510, the surface at the side of the connecting member 500 facing the annular stepped surface 240 can be pressed with the annular stepped surface 240 with an interference fit, so that the connecting member 500 is tightly pressed with the annular stepped surface 240 of the pole 200. When the connecting member 500 and the pole 200 are welded by laser, the welding laser is not easy to pass through the connection between the connecting member 500 and the annular stepped surface 240 and burn the upper insulating member 300 and the sealing member 600, which further improves the sealing performance of the sealing member 600.

As shown in FIG. 6, the connecting member 500 has a plurality of first grooves 510, each of which penetrates the hole wall of the second pole hole 501 and extends along a radial direction of the second pole hole 501, and the plurality of first grooves 510 are arranged at equal intervals along the circumferential direction of the second pole hole 501.

In one embodiment, the connecting member 500 has four first grooves 510, but is not limited thereto.

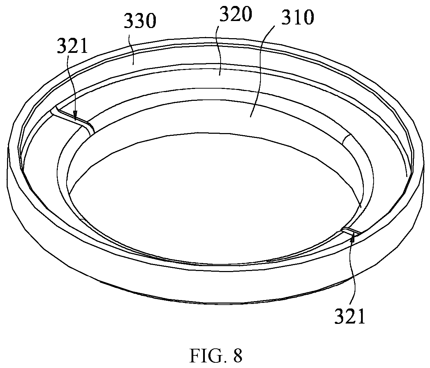

As shown in FIG. 5 and FIG. 8, the upper insulating member 300 includes a first annular portion 310, a second annular portion 320 and a third annular portion 330 that are connected. The first annular portion 310 is inserted into the first pole hole 103 and surrounds the outer circumference of the first pole section 210. The second annular portion 320 and the third annular portion 330 are located at the side where the first surface 101 of the end plate 100 is located.

The pole 200 also has a third pole section 230, which is coaxially arranged with the first pole section 210. The first pole section 210 is connected between the second pole section 220 and the third pole section 230. The cross-sectional area of the third pole section 230 is larger than the cross-sectional area of the first pole section 210. The third annular portion 330 surrounds the outer circumference of the third pole section 230. The second annular portion 320 is arranged between the third pole section 230 and the end plate 100.

The second annular portion 320 has at least one second groove 321 at one side facing the third pole section 230, and the second groove 321 extends from the inner annular surface of the first annular portion 310 to the inner annular surface of the third annular portion 330.

In the embodiments of the present application, since the second annular portion 320 has the second groove 321 at one side facing the third pole section 230, in the case where the sealing member 600 is missing or the sealing member 600 is damaged, the spaces at two sides of the end cap assembly 30 in the thickness direction are communicated through the second groove 321. At this time, the end cap assembly 30 will not pass the airtightness detection, thereby further improving the accuracy of the airtightness detection of the end cap assembly 30.

In one embodiment, the second annular portion 320 has a plurality of second grooves 321, each of which extends along the radial direction of the pole 200, and the plurality of second grooves 321 are arranged at equal intervals along the circumferential direction of the pole.

As an example, the respective orthogonal projections of the first groove 510 and the second groove 321 on the plane where the first surface 101 is located are arranged in a staggered manner. In other words, the first groove 510 and the second groove 321 are staggered along the axial direction of the pole 200.

In the embodiments of the present application, the first groove 510 and the second groove 321 are designed to be staggered along the axial direction of the pole 200, which can improve the uniformity of the distribution of the pressing force of the pole 200, thereby avoiding the overlap of the regions where the grooves are located along the axial direction of the pole to form a weak area and easily form a leakage point, thereby improving the overall sealing performance of the end cap assembly.

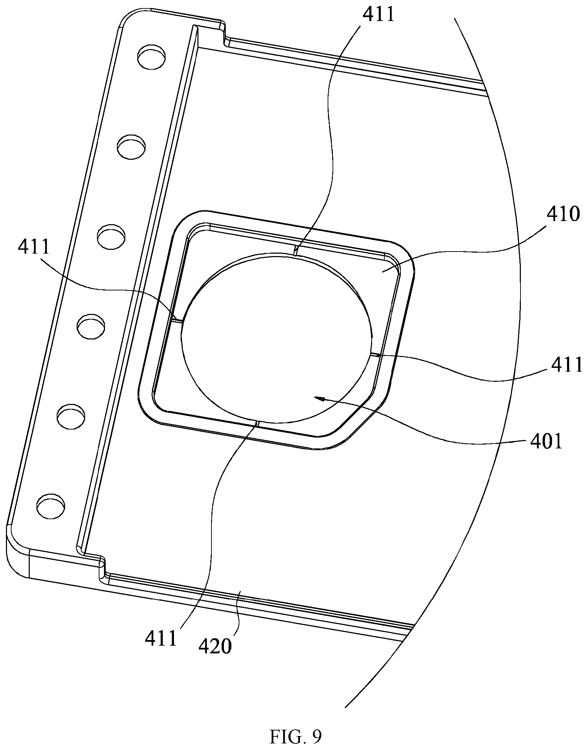

As shown in FIGs. 5 and 9, the end plate 100 also has a sinking groove 104, which is recessed from the second surface 102 to the first surface 101 along the thickness direction of the end plate 100, and the first pole hole 103 penetrates the bottom surface of the sinking groove 104.

The lower insulating member 400 has an insulating sheet 420, a fourth annular portion 430 and a flange. The insulating sheet 420 is located at the side where the second surface 102 of the end plate 100 is located, and has a through hole 421. The through hole 421 penetrates the insulating sheet 420 along the thickness direction of the end plate 100, the second pole section 220 is inserted into the through hole 421, and the connecting member 500 is limited in the through hole 421.

The fourth annular portion 430 is connected to the edge of the through hole 421, and is convexly arranged on the surface at the side of the insulating sheet 420 facing the end plate 100. The fourth annular portion 430 is located in the sinking groove 104 and surrounds the outer circumference of the connecting member 500.

The annular flange 410 is convexly arranged on the inner annular surface of the fourth annular portion 430, and is located at the side of the connecting member 500 facing the annular stepped surface 240, and is located in the sinking groove 104. The annular flange 410 has a third pole hole 401 coaxially arranged with the first pole hole 103, and the first pole section 210 is inserted into the third pole hole 401. The annular flange 410 has at least one third groove 411 at the side facing the connecting member 500, and the third groove 411 is communicated with the third pole hole 401. The third groove 411 extends from the hole wall of the third pole hole 401 to the inner annular surface of the fourth annular portion 430.

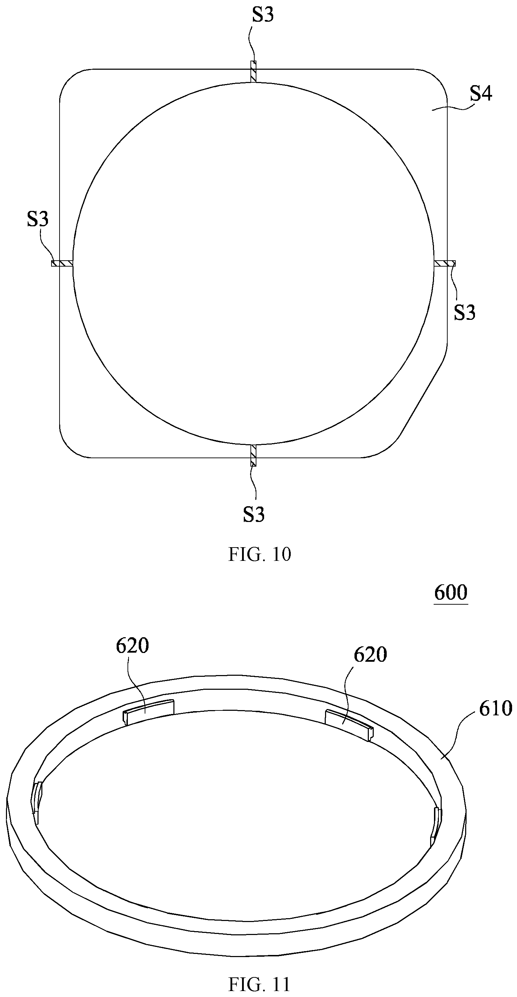

As shown in FIG. 10, the orthographic projection of the third groove 411 on the plane where the first surface 101 is located is the third projection S3, and the orthographic projection of the connecting member 500 on the plane where the first surface 101 is located is the fourth projection S4. There is an overlapping region between the third projection S3 and the fourth projection S4, and part of the third projection S3 extends out of the outer contour line of the fourth projection S4.

In the embodiments of the present application, since the annular flange 410 has the third groove 411 at the side facing the connecting member 500, in the case where the sealing member 600 is missing or the sealing member 600 is damaged, the spaces at two sides of the end cap assembly 30 in the thickness direction are communicated through the third groove 411. At this time, the end cap assembly 30 will not pass the airtightness detection, thereby further improving the accuracy of the airtightness detection of the end cap assembly 30.

As shown in FIG. 9, the annular flange 410 has a plurality of third grooves 411, each of which penetrates the hole wall of the third pole hole 401 and extends along a radial direction of the third pole hole 401, and the plurality of third grooves 411 are arranged at equal intervals along the circumferential direction of the third pole hole 401.

In one embodiment, the annular flange 410 has four third grooves 411, but is not limited thereto.

As an example, the respective orthographic projections of the first groove(s) 510 and the third groove(s) 411 on the plane where the first surface 101 is located are staggered. In other words, the first groove(s) 510 and the third groove(s) 411 are staggered along the axial direction of the pole 200.

In the embodiments of the present application, the first groove(s) 510 and the third groove(s) 411 are designed to be staggered along the axial direction of the pole 200, which can improve the uniformity of the distribution of the pressing force of the pole, thereby avoiding the overlap of the regions where the grooves are located along the axial direction of the pole to form a weak area and easily form a leakage point, thereby improving the overall sealing performance of the end cap assembly.

Furthermore, the respective orthographic projections the first groove(s) 510, the second groove(s) 321, and the third groove(s) 411 on the plane where the first surface 101 is located are staggered, which further improves the uniformity of the pressing force distribution of the pole, thereby avoiding the overlap of the regions where the grooves are located along the axial direction of the pole to form a weak area and easily form a leakage point, thereby improving the overall sealing performance of the end cap assembly.

As shown in FIGs. 5 and 11, the sealing member 600 is located in the sinking groove 104 and is sleeved around the outer circumference of the first annular portion 310. The sealing member 600 includes a sealing ring 610 and a plurality of protrusions 620. The sealing ring 610 is located between the end plate 100 and the connecting member 500. The plurality of protrusions 620 are convexly arranged on the inner annular surface of the sealing ring 610 and are arranged along the circumferential direction of the sealing ring 610.

On the one hand, the plurality of protrusions 620 can make the sealing ring 610 form an irregular ring structure, preventing the sealing ring 610 from gathering toward the center of the sealing ring 610 after being pressed by the connecting member 500, thereby preventing the sealing ring 610 from plugging the connection between the connecting member 500 and the second pole section 220 to form a temporary seal. In this way, when there is a welding defect at the welding position between the connecting member 500 and the second pole section 220, the end cap assembly 30 cannot pass the airtightness detection, thereby improving the accuracy of the airtightness detection. On the other hand, when the sealing member 600 is sleeved around the outer circumference of the pole 200, the plurality of protrusions 620 can play a guiding role, which is conducive to improving the assembly efficiency.

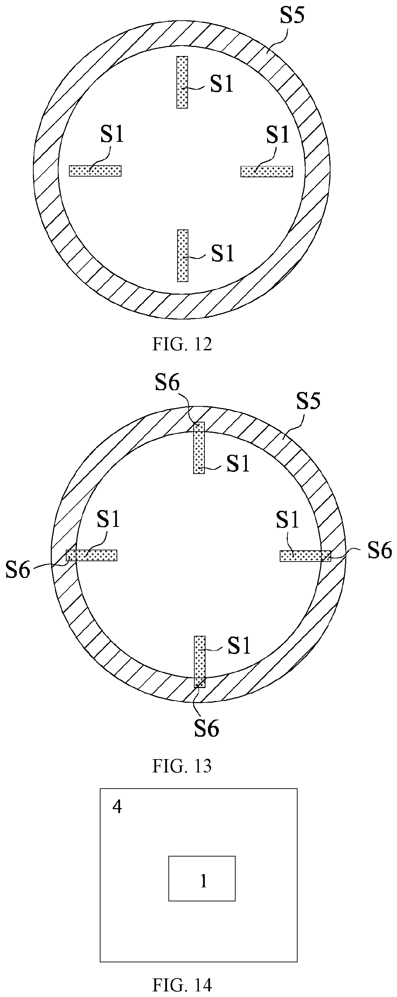

As shown in FIG. 12, in one embodiment, the orthographic projection of the sealing ring 610 on the plane where the first surface 101 is located is the fifth projection S5; where the first projection S1 and the fifth projection S5 do not overlap.

Alternatively, as shown in FIG. 13, in another embodiment, there is a sixth projection S6 in which the first projection S1 and the fifth projection S5 overlap, and the maximum dimension of the sixth projection S6 along the radial direction of the fifth projection S5 is less than half of the ring width of the fifth projection S5. The ring width refers to the outer circle radius minus the inner circle radius of the fifth projection S5.

In the embodiments of the present application, the sealing ring 610 forms an annular sealing surface after contacting the connecting member 500. Since the first projection S1 does not overlap with the fifth projection S5 or the maximum dimension of the sixth projection S6 is less than half of the ring width of the fifth projection S5, the first groove 510 does not completely penetrate the sealing surface, thereby ensuring that the sealing ring 610 can form a flat annular sealing surface with the end plate 100 and the connecting member 500, respectively. After the sealing ring 610 is squeezed, the sealing surface is evenly stressed, and the sealing performance is relatively high.

As shown in FIG. 14, the embodiment of the present application also provides an electricity-consumption equipment 4, which may be an energy storage device, a vehicle, a container-type energy storage device, etc. The electricity-consumption equipment 4 includes the energy storage device 1 described in the above embodiments, and the energy storage device 1 supplies power to the electricity-consumption equipment 4. In this way, for the electricity-consumption equipment 4 including the energy storage device 1 described above, the working stability of the electricity-consumption equipment 4 can be improved, the probability of downtime of the electricity-consumption equipment 4 can be reduced, and the safety of the use of the electricity-consumption equipment 4 can be improved.

It may be understood that the various embodiments/implementations provided in the present application can be combined with each other if there is no contradiction, and examples are not given here one by one.

In the embodiments of the present application, the terms "first", "second", and "third" are used for descriptive purposes only and cannot be understood as indicating or implying relative importance; the term "a plurality of" refers to two or more, unless otherwise clearly defined. The terms such as "mount", "link", "connect", and "fix" may be understood in a broad sense. For example, "connect" can be a fixed connection, a detachable connection, or an integral connection; "link" can be directly linked or indirectly linked through an intermediate medium. For those skilled in the art, the specific meanings of the above terms in the embodiments of the present application can be understood according to specific circumstances.

In the description of the embodiments of the present application, it may be understood that the directions or positional relationships indicated by the terms "on", "below", "left", "right", "front", and "back" are based on the directions or positional relationships shown in the drawings, which are only for the convenience of describing the embodiments of the present application and simplifying the description, rather than indicating or implying that the device or unit referred to must have a specific direction, be constructed and operated in a specific direction, and therefore cannot be understood as a limitation on the embodiments of the present application.

In the description of this specification, the description of the terms "one embodiment", "some embodiments", "specific embodiments", etc. means that the specific features, structures, materials or characteristics described in conjunction with the embodiments or examples are included in at least one embodiment or example of the embodiments of the present application. In this specification, the schematic representation of the above terms does not necessarily refer to the same embodiment or example. Moreover, the specific features, structures, materials or characteristics described can be combined in any one or more embodiments or examples in a suitable manner.

The above are only preferred embodiments of the embodiments of the present application and are not intended to limit the embodiments of the present application. For those skilled in the art, the embodiments of the present application may have various changes and variations. Any modifications, equivalent substitutions, improvements, etc. made within the spirit and principles of the embodiments of the present application may be included in the protection scope of the embodiments of the present application.

## Claims

1. An end cap assembly (30) for an energy storage device, comprising:
an end plate (100) having a first surface (101) and a second surface (102) disposed opposite to each other along a thickness direction of the end plate (100); wherein the end plate (100) further has a first pole hole (103), and the first pole hole (103) penetrates the first surface (101) and the second surface (102);
a pole (200) having a first pole section (210) and a second pole section (220) along an axial direction of the pole (200), wherein a cross-sectional area of the first pole section (210) is larger than a cross-sectional area of the second pole section (220), an outer circumferential surface of the first pole section (210) and an outer circumferential surface of the second pole section (220) are connected through an annular stepped surface (240), and the first pole section (210) is inserted into the first pole hole (103);
a connecting member (500), located at a side where the annular stepped surface (240) of the pole (200) is located, and having a second pole hole (501) coaxially disposed with the first pole hole (103), wherein the second pole section (220) is inserted into the second pole hole (501) and is connected to the connecting member (500); the connecting member (500) has at least one first groove (510) at a side facing the annular stepped surface (240), and the first groove (510) is communicated with the second pole hole (501); and
wherein an orthographic projection of the first groove (510) on a plane where the first surface (101) is located is a first projection (S1), an orthographic projection of the annular stepped surface (240) on the plane where the first surface (101) is located is a second projection (S2), the first projection (S1) and the second projection (S2) have an overlapping region, and part of the first projection (S1) extends beyond an outer contour line of the second projection (S2).

2. The end cap assembly (30) according to claim 1, wherein a surface at a side of the connecting member (500) facing the annular stepped surface (240) is press-fitted to the annular stepped surface (240).

3. The end cap assembly (30) according to claim 1, wherein the connecting member (500) has a plurality of first grooves (510), each of the plurality of first grooves (510) extends along a radial direction of the second pole hole (501), and the plurality of first grooves (510) are arranged at equal intervals along a circumferential direction of the second pole hole (501).

4. The end cap assembly (30) according to claim 1, wherein the end cap assembly (30) further comprises an upper insulating member (300), comprising a first annular portion (310), a second annular portion (320) and a third annular portion (330), the first annular portion (310) is connected to an end of the second annular portion (320), the third annular portion (330) is connected to an other end of the second annular portion (320), the first annular portion (310) is inserted into the first pole hole (103) and surrounds an outer circumference of the first pole section (210), the second annular portion (320) and the third annular portion (330) are located at a side where the first surface (101) of the end plate (100) is located;
the pole (200) further has a third pole section (230), the first pole section (210) is connected between the second pole section (220) and the third pole section (230), a cross-sectional area of the third pole section (230) is larger than a cross-sectional area of the first pole section (210), the third annular portion (330) surrounds an outer circumference of the third pole section (230), and the second annular portion (320) is arranged between the third pole section (230) and the end plate (100); and
the second annular portion (320) has at least one second groove (321) at a side facing the third pole section (230), and the second groove (321) extends from an inner annular surface of the first annular portion (310) to an inner annular surface of the third annular portion (330).

5. The end cap assembly (30) according to claim 4, wherein the second annular portion (320) has a plurality of second grooves (321), each of the plurality of second grooves (321) extends along a radial direction of the pole (200), and the plurality of second grooves (321) are arranged at equal intervals along a circumferential direction of the pole (200).

6. The end cap assembly (30) according to claim 4, wherein respective orthographic projections of the first groove (510) and the second groove (321) on the plane where the first surface (101) is located are arranged in a staggered manner.

7. The end cap assembly (30) according to claim 1, wherein the end cap assembly (30) further comprises a lower insulating member (400) located at a side where the second surface (102) of the end plate (100) is located, the lower insulating member (400) has an annular flange (410), and the annular flange (410) is located at a side of the connecting member (500) facing the annular stepped surface (240);
the annular flange (410) has a third pole hole (401) coaxially arranged with the first pole hole (103), and the first pole section (210) is inserted into the third pole hole (401);
the annular flange (410) has at least one third groove (411) at a side facing the connecting member (500), and the third groove (411) is communicated with the third pole hole (401); and
an orthographic projection of the third groove (411) on the plane where the first surface (101) is located is a third projection (S3), an orthographic projection of the connecting member (500) on the plane where the first surface (101) is located is a fourth projection (S4), the third projection (S3) and the fourth projection (S4) have an overlapping region, and part of the third projection (S3) extends beyond an outer contour line of the fourth projection (54).

8. The end cap assembly (30) according to claim 7, wherein the annular flange (410) has a plurality of third grooves (411), each of the plurality of third grooves (411) extends along a radial direction of the third pole hole (401), and the plurality of the third grooves (411) are arranged at equal intervals along a circumferential direction of the third pole hole (401).

9. The end cap assembly (30) according to claim 7, wherein respective orthographic projections of the first groove (510) and the third groove (411) on the plane where the first surface (101) is located are arranged in a staggered manner.

10. The end cap assembly (30) according to claim 7, wherein the end plate (100) further has a sinking groove (104), the sinking groove (104) is recessed from the second surface (102) to the first surface (101) along the thickness direction of the end plate (100), and the first pole hole (103) penetrates a bottom surface of the sinking groove (104); the annular flange (410) is located in the sinking groove (104);
the lower insulating member (400) further comprises an insulating sheet (420) and a fourth annular portion (430), the insulating sheet (420) is located at the side where the second surface (102) of the end plate (100) is located, and has a through hole (421), the through hole (421) penetrates the insulating sheet (420) along the thickness direction of the end plate (100), and the connecting member (500) is limited in the through hole (421);
the fourth annular portion (430) is connected to an edge of the through hole (421) and is convexly arranged on a surface at a side of the insulating sheet (420) facing the end plate (100), the fourth annular portion (430) is located in the sinking groove (104) and surrounds an outer circumference of the connecting member (500); and
the annular flange (410) is convexly arranged on an inner annular surface of the fourth annular portion (430), and the third groove (411) extends from a hole wall of the third pole hole (401) to the inner annular surface of the fourth annular portion (430).

11. The end cap assembly (30) according to claim 1, wherein the end cap assembly (30) further comprises a sealing member (600), the sealing member (600) comprises a sealing ring (610) and a plurality of protrusions (620), the sealing ring (610) is sleeved around an outer circumference of the pole (200) and is located between the end plate (100) and the connecting member (500), the plurality of protrusions (620) protruding from an inner annular surface of the sealing ring (610) and being arranged along a circumferential direction of the sealing ring (610).

12. The end cap assembly (30) according to claim 1, wherein the end cap assembly (30) further comprises a sealing ring (610), the sealing ring (610) is sleeved around an outer circumference of the pole (200) and is located between the end plate (100) and the connecting member (500); an orthographic projection of the sealing ring (610) on the plane where the first surface (101) is located is a fifth projection (S5);
wherein the first projection (S1) and the fifth projection are non-overlap (S5); or, the first projection (S1) and the fifth projection (S5) have an overlapping sixth projection (S6), and a maximum dimension of the sixth projection (S6) along a radial direction of the fifth projection (S5) is less than half of a ring width of the fifth projection (S5).

13. The end cap assembly (30) according to claim 1, wherein a number of the at least one first groove (510) is four.

14. An energy storage device (1), comprising:
a housing (10), comprising an accommodating cavity (11) having an opening (12);
an electrode assembly (20), accommodated in the housing (10); and
an end cap assembly (30) according to any one of claims 1 to 13, wherein the end cap assembly (30) closes the opening (12) of the accommodating cavity (11).

15. An electricity-consumption equipment (4), comprising an energy storage device (1) according to claim 14, wherein the energy storage device (1) supplies power to the electricity-consumption equipment (4).
